# EUROPÄISCHE PATENTANMELDUNG

(11) **EP 3 928 895 A1**
(43) Veröffentlichungstag der Anmeldung: **29.12.2021**
(21) Anmeldenummer: 20181953.9
(22) Anmeldetag: 24.06.2020
(51) Int. Cl.: B22F 3/02, B22F 3/10, B22F 3/14, B22F 7/06, B22F 7/08, B24D 5/06, B24D 7/06, B24D 18/00, B22F 5/00, B24D 5/12, B24D 99/00, B28D 1/04, B28D 1/12

(54) **VERFAHREN ZUR HERSTELLUNG EINES GRÜNLINGS UND VERFAHREN ZUR WEITERVERARBEITUNG DES GRÜNLINGS IN EIN BEARBEITUNGSSEGMENT**

(71) Anmelder: Hilti Aktiengesellschaft, 9494 Schaan (LI)
(72) Erfinder: Klein, Thorsten, 9436 Balgach (CH); Hoop, Matthaeus, 9492 Eschen (LI); Britt, Thomas, 8890 Flums (CH); Stracke, Jens, 6800 Feldkirch (AT); Moseley, Steven, 6820 Nenzing-Gurtis (AT); Szabó, József, 6000 KECSKEMÉT (HU)
(74) Vertreter: Hilti Aktiengesellschaft Corporate Intellectual Property

(57) **Zusammenfassung**

Verfahren zur Herstellung eines Grünlings für ein Bearbeitungssegment (51) aus einem pulver- oder granulatförmigen ersten Matrixwerkstoff (56) und ersten Hartstoffpartikeln (57), wobei das Bearbeitungssegment mit einer Unterseite (61) mit einem Grundkörper eines Bearbeitungswerkzeuges verbunden wird. Das Bearbeitungssegment (51) weist an einer der Unterseite (61) gegenüber liegenden Oberseite (62) einen Überstand (Δ) der ersten Hartstoffpartikel (57) auf.

## Beschreibung

### Technisches Gebiet

Die vorliegende Erfindung betrifft ein Verfahren zur Herstellung eines Grünlings gemäß dem Oberbegriff des Anspruchs 1 sowie ein Verfahren zur Weiterverarbeitung eines Grünlings in ein Bearbeitungssegment gemäß dem Oberbegriff des Anspruchs 7.

### Stand der Technik

Bearbeitungswerkzeuge, wie Kernbohrkronen, Sägeblätter, Abtragscheiben und Trennschleifketten, umfassen Bearbeitungssegmente, die an einem rohr-, scheiben- oder ringförmigen Grundkörper befestigt werden, wobei die Bearbeitungssegmente durch Schweißen, Löten oder Kleben mit dem Grundkörper verbunden werden. Abhängig vom Bearbeitungsverfahren des Bearbeitungswerkzeugs werden Bearbeitungssegmente, die zum Kernbohren eingesetzt werden, als Bohrsegmente, Bearbeitungssegmente, die zum Sägen eingesetzt werden, als Sägesegmente, Bearbeitungssegmente, die zum Abtragen eingesetzt werden, als Abtragsegmente und Bearbeitungssegmente, die zum Trennschleifen eingesetzt werden, als Trennschleifsegmente bezeichnet.

Bearbeitungssegmente für Kernbohrkronen, Sägeblätter, Abtragscheiben und Trennschleifketten werden aus einem Matrixwerkstoff und Hartstoffpartikeln hergestellt, wobei die Hartstoffpartikel statistisch verteilt vorliegen können oder gemäß einem definierten Partikelmuster im Matrixwerkstoff angeordnet sind. Bei Bearbeitungssegmenten mit statistisch verteilten Hartstoffpartikeln werden der Matrixwerkstoff und die Hartstoffpartikel gemischt, die Mischung wird in eine passende Werkzeugform eingefüllt und zum Bearbeitungssegment weiterverarbeitet. Bei Bearbeitungssegmenten mit definiert angeordneten Hartstoffpartikeln wird ein Grünling schichtweise aus Matrixwerkstoff aufgebaut, in den die Hartstoffpartikel gemäß dem definierten Partikelmuster angeordnet werden. Bei Bearbeitungssegmenten, die mit dem Grundkörper des Bearbeitungswerkzeuges verschweißt werden sollen, hat sich der Aufbau aus einer Bearbeitungszone und einer Neutralzone bewährt, da einige Kombinationen aus Matrixwerkstoff und Grundkörper nicht schweißbar sind. Die Bearbeitungszone wird aus einem ersten Matrixwerkstoff und die Neutralzone aus einem zweiten Matrixwerkstoff, der vom ersten Matrixwerkstoff verschieden und mit dem Grundkörper schweißbar ist, aufgebaut.

Bearbeitungswerkzeuge, die als Kernbohrkrone, Sägeblatt, Abtragscheibe oder Trennschleifkette ausgebildet sein können und für die Nassbearbeitung von Betonwerkstoffen vorgesehen sind, sind für die Trockenbearbeitung von Betonwerkstoffen nur bedingt geeignet. Bei der Nassbearbeitung von Betonwerkstoffen entsteht ein abrasiver Betonschlamm, der den Bearbeitungsprozess unterstützt und zu einem Selbstschärfen der Bearbeitungssegmente während der Bearbeitung führt. Der Matrixwerkstoff wird durch den abrasiven Betonschlamm abgetragen und neue Hartstoffpartikel werden freigelegt. Bei der Trockenbearbeitung von Betonwerkstoffen kann sich kein abrasiver Betonschlamm bilden, der den Bearbeitungsprozess unterstützen kann. Die Hartstoffpartikel werden schnell stumpf und die Bearbeitungsrate sinkt. Durch den fehlenden Betonschlamm verschleißt der Matrixwerkstoff zu langsam und tiefer liegende Hartstoffpartikel können nicht freigelegt werden.

Für die Trockenbearbeitung von Betonwerkstoffen sind Bearbeitungssegmente erforderlich, bei denen die ersten Hartstoffpartikel an der Oberseite einen Überstand gegenüber dem ersten Matrixwerkstoff aufweisen. Dabei gilt, dass die Bearbeitungsrate, die mit dem Bearbeitungssegment erzielt werden kann, umso höher ist, je grösser der Überstand der ersten Hartstoffpartikel ist. Die europäische Patentanmeldung EP 3 670 041 betrifft ein Verfahren zur Herstellung eines Bearbeitungssegmentes aus einem ersten Matrixwerkstoff und ersten Hartstoffpartikeln, die gemäß einem definierten ersten Partikelmuster angeordnet werden. Das Verfahren zeichnet sich dadurch aus, dass ein Grünling hergestellt wird, bei dem die ersten Hartstoffpartikel an der Oberseite einen Überstand gegenüber dem ersten Matrixwerkstoff aufweisen. Der Grünling wird mit einem speziellen Pressstempel weiterverarbeitet, welcher in einer Pressfläche Vertiefungen aufweist, wobei die Anordnung der Vertiefungen dem definierten ersten Partikelmuster der ersten Hartstoffpartikel entspricht.

Das bekannte Verfahren zur Herstellung eines Bearbeitungssegmentes weist den Nachteil auf, dass für die Weiterverarbeitung des Grünlings zum Bearbeitungssegment ein spezieller Pressstempel mit Vertiefungen in der Pressfläche erforderlich ist, der beim Verdichten oder beim Heißpressen verwendet wird. Für jedes definierte erste Partikelmuster, gemäß dem die ersten Hartstoffpartikel angeordnet werden, ist ein spezieller Pressstempel erforderlich.

### Darstellung der Erfindung

Die Aufgabe der vorliegenden Erfindung besteht darin, ein Verfahren zur Herstellung eines Grünlings für ein Bearbeitungssegment zu entwickeln, mit dem Bearbeitungssegmente hergestellt werden können, die an der Oberseite einen Überstand der Hartstoffpartikel aufweisen. Dabei sollen sowohl bei der Herstellung des Grünlings als auch bei der Weiterverarbeitung des Grünlings in das Bearbeitungssegment herkömmliche Werkzeugkomponenten verwendet werden; der Einsatz von speziellen Werkzeugkomponenten soll vermieden werden.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Grünlings für ein Bearbeitungssegment aus einem pulver- oder granulatförmigen ersten Matrixwerkstoff und ersten Hartstoffpartikeln, die gemäß einem definierten ersten Partikelmuster angeordnet werden, ist erfindungsgemäß gekennzeichnet durch eine Folge eines ersten Schrittes und zweiten Schrittes, die N-fach, N ≥ 1 ausgeführt wird, wobei:
▪ im ersten Schritt eine Matrixschicht aus einem ersten Bereich und einem zweiten Bereich aufgetragen wird, wobei im ersten Bereich der erste Matrixwerkstoff und im zweiten Bereich ein pulver- oder granulatförmiges Stützmaterial, das vom ersten Matrixwerkstoff verschieden ist, aufgetragen wird, und
▪ im zweiten Schritt die ersten Hartstoffpartikel gemäß dem definierten ersten Partikelmuster in der Matrixschicht angeordnet werden, wobei die ersten Hartstoffpartikel in einem Übergangsbereich zwischen dem ersten Bereich und zweiten Bereich angeordnet werden.

Das erfindungsgemäße Verfahren zur Herstellung eines Grünlings zeichnet sich dadurch aus, dass die Grünlinge liegend aufgebaut werden, d.h. die Aufbaurichtung verläuft senkrecht zur Höhenrichtung zwischen der Unterseite und Oberseite des Bearbeitungssegmentes. Beim liegenden Aufbau unterscheiden sich die Partikelschichten des Grünlings von den übereinander angeordneten Partikellagen des fertigen Bearbeitungssegmentes. Der Überstand der zweiten Hartstoffpartikel an den Seitenflächen der Bearbeitungssegmente wird mithilfe des pulver- oder granulatförmigen Stützmaterials erzeugt, wobei das Stützmaterial vom ersten Matrixwerkstoff verschieden ist.

Beim Aufbau des Grünlings werden die ersten Hartstoffpartikel im ersten Matrixwerkstoff und im Stützmaterial angeordnet, so dass die ersten Hartstoffpartikel vollständig in pulver- oder granulatförmiges Material eingebettet sind. Da die ersten Hartstoffpartikel beim Grünling vollständig in pulver- oder granulatförmiges Material eingebettet werden, können beim Verdichten des Grünlings durch Kalt- oder Warmpressen oder beim Weiterverarbeiten zum Bearbeitungssegment durch Heißpressen herkömmliche Pressstempel verwendet werden.

Grünlinge, die mittels des erfindungsgemäßen Verfahrens zur Herstellung eines Grünlings hergestellt werden, können mittels bekannter Verfahren zur Weiterverarbeitung des Grünlings in Bearbeitungssegmente weiterverarbeitet werden. Zu den bekannten Verfahren zur Weiterverarbeitung gehören das Verdichten des Grünlings durch Kaltpressen oder Warmpressen zu einem Pressling, der durch Freiformsintern oder Heißpressen zum Bearbeitungssegment weiterverarbeitet wird oder die Weiterverarbeitung des Grünlings durch Freiformsintern oder Heißpressen zum Bearbeitungssegment.

Grünlinge werden unter Temperatureinwirkung durch Freiformsintern oder Heißpressen zum fertigen Bearbeitungssegment weiterverarbeitet, wobei die Sintertemperatur des ersten Matrixwerkstoffes festlegt, bis zu welcher Temperatur die Grünlinge oder Presslinge aufgeheizt werden müssen. Das Stützmaterial kann bei der Weiterverarbeitung des Grünlings zum Bearbeitungssegment seinen pulver- oder granulatförmigen Zustand behalten oder als Infiltrat den Sintervorgang unterstützen.

In einer ersten Variante wird im zweiten Bereich der Matrixschicht ein Stützmaterial mit einer Schmelztemperatur aufgetragen, die höher als die Sintertemperatur des ersten Matrixwerkstoffes ist. Wenn die Schmelztemperatur des Stützmaterials höher als die Sintertemperatur des ersten Matrixwerkstoffes ist, verbleibt das Stützmaterial beim Aufheizen in seinem pulver- oder granulatförmigen Zustand und kann nach dem Sintervorgang problemlos vom fertigen Bearbeitungssegment entfernt werden.

In einer zweiten Variante wird im zweiten Bereich der Matrixschicht ein Stützmaterial mit einer Schmelztemperatur aufgetragen, die niedriger als die Sintertemperatur des ersten Matrixwerkstoffes ist. Wenn die Schmelztemperatur des Stützmaterials niedriger als die Sintertemperatur des ersten Matrixwerkstoffes ist, verändert das Stützmaterial beim Aufheizen seinen pulver- oder granulatförmigen Zustand und verflüssigt sich, bevor der erste Matrixwerkstoff versintert. Das flüssige Stützmaterial kann sich im ersten Matrixwerkstoff verteilen und den Sintervorgang als Infiltrat unterstützen.

In einer Weiterentwicklung des Verfahrens wird nach der N-ten Folge eine obere Matrixschicht aus einem ersten Bereich und einem zweiten Bereich aufgetragen, wobei im ersten Bereich der erste Matrixwerkstoff und im zweiten Bereich das Stützmaterial aufgetragen wird. Der Grünling wird liegend aufgebaut, die Aufbaurichtung verläuft zwischen den Seitenflächen des Bearbeitungssegmentes. Die obere Matrixschicht wird insbesondere dann aufgetragen, wenn die ersten Hartstoffpartikel nicht ausreichend tief in den ersten Matrixwerkstoff und das Stützmaterial eingebettet sind.

In einer ersten Variante wird im zweiten Bereich der N Matrixschichten und im zweiten Bereich der oberen Matrixschicht ein Stützmaterial mit einer Schmelztemperatur aufgetragen, die höher als die Sintertemperatur des ersten Matrixwerkstoffes ist. Wenn die Schmelztemperatur des Stützmaterials höher als die Sintertemperatur des ersten Matrixwerkstoffes ist, verbleibt das Stützmaterial beim Aufheizen in seinem pulver- oder granulatförmigen Zustand und kann nach dem Sintervorgang problemlos vom fertigen Bearbeitungssegment entfernt werden.

In einer zweiten Variante wird im zweiten Bereich der N Matrixschichten und im zweiten Bereich der oberen Matrixschicht ein Stützmaterial mit einer Schmelztemperatur aufgetragen, die niedriger als die Sintertemperatur des ersten Matrixwerkstoffes ist. Wenn die Schmelztemperatur des Stützmaterials niedriger als die Sintertemperatur des ersten Matrixwerkstoffes ist, verändert das Stützmaterial beim Aufheizen seinen pulver- oder granulatförmigen Zustand und verflüssigt sich, bevor der erste Matrixwerkstoff versintert. Das flüssige Stützmaterial kann sich im ersten Matrixwerkstoff verteilen und den Sintervorgang als Infiltrat unterstützen.

Die Erfindung betrifft weiterhin ein Verfahren zur Weiterverarbeitung eines Grünlings, der mit dem Verfahren zur Herstellung eines Grünlings hergestellt wurde, in ein Bearbeitungssegment, welches mit einer Unterseite mit einem Grundkörper eines Bearbeitungswerkzeuges verbunden wird. Bei einem Grünling, der mit dem erfindungsgemäßen Verfahren zur Herstellung eines Grünlings hergestellt wurde, weisen die ersten Hartstoffpartikel an der Oberseite keinen Überstand auf. Der Überstand der ersten Hartstoffpartikel an der Oberseite wird bei der Weiterverarbeitung des Grünlings zum Bearbeitungssegment erzeugt.

In einer ersten Ausführung wird der Grünling unter Druckeinwirkung zu einem Pressling verdichtet und der Pressling wird anschließend zum Bearbeitungssegment weiterverarbeitet. Dabei wird der Grünling unter Druckeinwirkung zwischen einem ersten Pressstempel, der eine erste Seitenfläche des Bearbeitungssegmentes formt, und einem zweiten Pressstempel, der eine zweite Seitenfläche des Bearbeitungssegmentes formt, zum Pressling verdichtet.

Besonders bevorzugt wird der Pressling durch Freiformsintern oder Heißpressen zum Bearbeitungssegment weiterverarbeitet. Da die ersten Hartstoffpartikel bei einem erfindungsgemäß hergestellten Grünling vollständig in pulver- oder granulatförmiges Material eingebettet wurden, können beim Heißpressen herkömmliche Pressstempel verwendet werden.

In einer zweiten Ausführung wird der Grünling durch Freiformsintern oder Heißpressen zum Bearbeitungssegment weiterverarbeitet. Da die ersten Hartstoffpartikel bei einem erfindungsgemäß hergestellten Grünling vollständig in pulver- oder granulatförmiges Material eingebettet wurden, können beim Heißpressen herkömmliche Pressstempel verwendet werden.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIGN. 1A, B: zwei Varianten eines als Kernbohrkrone ausgebildeten Bearbeitungswerkzeuges;
- FIGN. 2A, B: zwei Varianten eines als Sägeblatt ausgebildeten Bearbeitungswerkzeuges;
- FIG. 3: ein als Abtragscheibe ausgebildetes Bearbeitungswerkzeug;
- FIG. 4: ein als Trennschleifkette ausgebildetes Bearbeitungswerkzeug;
- FIGN. 5A-C: einen Grünling (FIG. 5A), der zu einem Pressling verdichtet (FIG. 5B) und zu einem Bearbeitungssegment weiterverarbeitet wird (FIG. 5C);
- FIGN. 6A-E: die Herstellung des Grünlings der FIG. 5A mithilfe des erfindungsgemäßen Verfahrens zur Herstellung eines Grünlings;
- FIGN. 7A, B: einen Grünling (FIG. 7A), der zu einem Bearbeitungssegment weiterverarbeitet wird (FIG. 7B); und
- FIGN. 8A-D: die Herstellung des Grünlings der FIG. 7A mithilfe des erfindungsgemäßen Verfahrens zur Herstellung eines Grünlings.

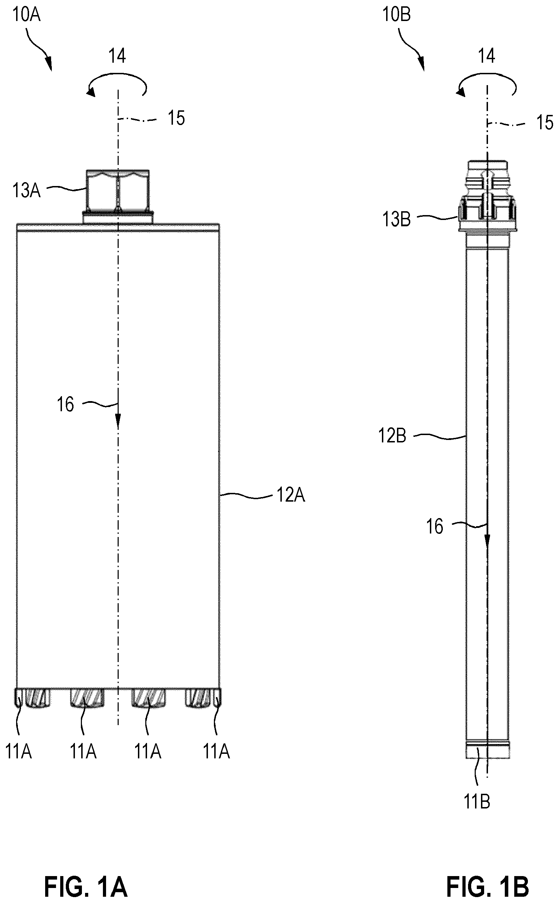

**FIGN. 1A****, B** zeigen zwei Varianten eines als Kernbohrkrone **10A, 10B** ausgebildeten Bearbeitungswerkzeuges. Die in FIG. 1A dargestellte Kernbohrkrone 10A wird im Weiteren als erste Kernbohrkrone und die in FIG. 1B dargestellte Kernbohrkrone 10B als zweite Kernbohrkrone bezeichnet, ausserdem werden die erste und zweite Kernbohrkrone 10A, 10B unter dem Begriff "Kernbohrkrone" zusammengefasst.

Die erste Kernbohrkrone 10A umfasst mehrere Bearbeitungssegmente **11A,** einen rohrförmig ausgebildeten Grundkörper **12A** und eine Werkzeugaufnahme **13A.** Die Bearbeitungssegmente 11A, die zum Kernbohren eingesetzt werden, werden auch als Bohrsegmente bezeichnet und der rohrförmig ausgebildete Grundkörper 12A wird auch als Bohrschaft bezeichnet. Die Bohrsegmente 11A sind fest mit dem Bohrschaft 12A verbunden, beispielsweise durch Schrauben, Kleben, Löten oder Schweißen.

Die zweite Kernbohrkrone 10B umfasst ein ringförmiges Bearbeitungssegment 11B, einen rohrförmig ausgebildeten Grundkörper **12B** und eine Werkzeugaufnahme **13B.** Das ringförmige Bearbeitungssegment 11B, das zum Kernbohren eingesetzt wird, wird auch als Bohrring bezeichnet und der rohrförmig ausgebildete Grundkörper 12B wird auch als Bohrschaft bezeichnet. Der Bohrring 11B ist fest mit dem Bohrschaft 12B verbunden, beispielsweise durch Schrauben, Kleben, Löten oder Schweißen.

Die Kernbohrkrone 10A, 10B wird über die Werkzeugaufnahme 13A, 13B mit einem Kernbohrgerät verbunden und im Bohrbetrieb vom Kernbohrgerät in einer Drehrichtung **14** um eine Drehachse **15** angetrieben. Während der Drehung der Kernbohrkrone 10A, 10B um die Drehachse 15 wird die Kernbohrkrone 10A, 10B entlang einer Vorschubrichtung **16** in ein zu bearbeitendes Werkstück bewegt, wobei die Vorschubrichtung 16 parallel zur Drehachse 15 verläuft. Die Kernbohrkrone 10A, 10B erzeugt im zu bearbeitenden Werkstück einen Bohrkern und ein Bohrloch.

Der Bohrschaft 12A, 12B ist im Ausführungsbeispiel der FIGN. 1A, B einteilig ausgebildet und die Bohrsegmente 11A bzw. der Bohrring 11B sind fest mit dem Bohrschaft 12A, 12B verbunden. Alternativ kann der Bohrschaft 12A, 12B zweiteilig aus einem ersten Bohrschaftabschnitt und einem zweiten Bohrschaftabschnitt ausgebildet sein, wobei die Bohrsegmente 11A bzw. der Bohrring 11B fest mit dem ersten Bohrschaftabschnitt und die Werkzeugaufnahme 13A, 13B fest mit dem zweiten Bohrschaftabschnitt verbunden ist. Der erste und zweite Bohrschaftabschnitt werden über eine lösbare Verbindungseinrichtung miteinander verbunden. Die lösbare Verbindungseinrichtung ist beispielsweise als Steck-Dreh-Verbindung, wie in EP 2 745 965 A1 oder EP 2 745 966 A1 beschrieben, ausgebildet. Die Ausbildung des Bohrschaftes als einteiliger oder zweiteiliger Bohrschaft hat keinen Einfluss auf den Aufbau der Bohrsegmente 11A bzw. des Bohrringes 11B.

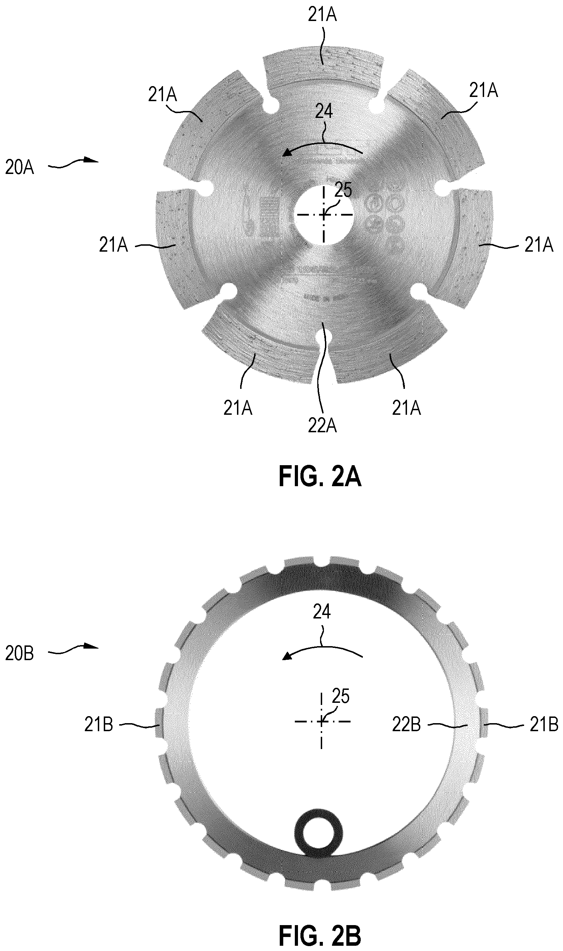

**FIGN. 2A****, B** zeigen zwei Varianten eines als Sägeblatt **20A, 20B** ausgebildeten Bearbeitungswerkzeuges. Das in FIG. 2A dargestellte Sägeblatt 20A wird im Weiteren als erstes Sägeblatt und das in FIG. 2B dargestellte Sägeblatt 20B als zweites Sägeblatt bezeichnet, ausserdem werden das erste und zweite Sägeblatt 20A, 20B unter dem Begriff "Sägeblatt" zusammengefasst.

Das erste Sägeblatt 20A umfasst mehrere Bearbeitungssegmente **21A,** einen scheibenförmig ausgebildeten Grundkörper **22A** und eine Werkzeugaufnahme. Die Bearbeitungssegmente 21A, die zum Sägen eingesetzt werden, werden auch als Sägesegmente bezeichnet und der scheibenförmig ausgebildete Grundkörper 22A wird auch als Stammblatt bezeichnet. Die Sägesegmente 21A sind fest mit dem Stammblatt 22A verbunden, beispielsweise durch Schrauben, Kleben, Löten oder Schweißen.

Das zweite Sägeblatt 20B umfasst mehrere Bearbeitungssegmente **21B,** einen ringförmig ausgebildeten Grundkörper **22B** und eine Werkzeugaufnahme. Die Bearbeitungssegmente 21B, die zum Sägen eingesetzt werden, werden auch als Sägesegmente bezeichnet und der ringförmig ausgebildete Grundkörper 22B wird auch als Ring bezeichnet. Die Sägesegmente 21B sind fest mit dem Ring 22B verbunden, beispielsweise durch Schrauben, Kleben, Löten oder Schweißen.

Das Sägeblatt 20A, 20B wird über die Werkzeugaufnahme mit einer Säge verbunden und im Sägebetrieb von der Säge in einer Drehrichtung **24** um eine Drehachse **25** angetrieben. Während der Drehung des Sägeblattes 20A, 20B um die Drehachse 25 wird das Sägeblatt 20A, 20B entlang einer Vorschubrichtung bewegt, wobei die Vorschubrichtung parallel zur Längsebene des Sägeblattes 20A, 20B verläuft. Das Sägeblatt 20A, 20B erzeugt im zu bearbeitenden Werkstück einen Sägeschlitz.

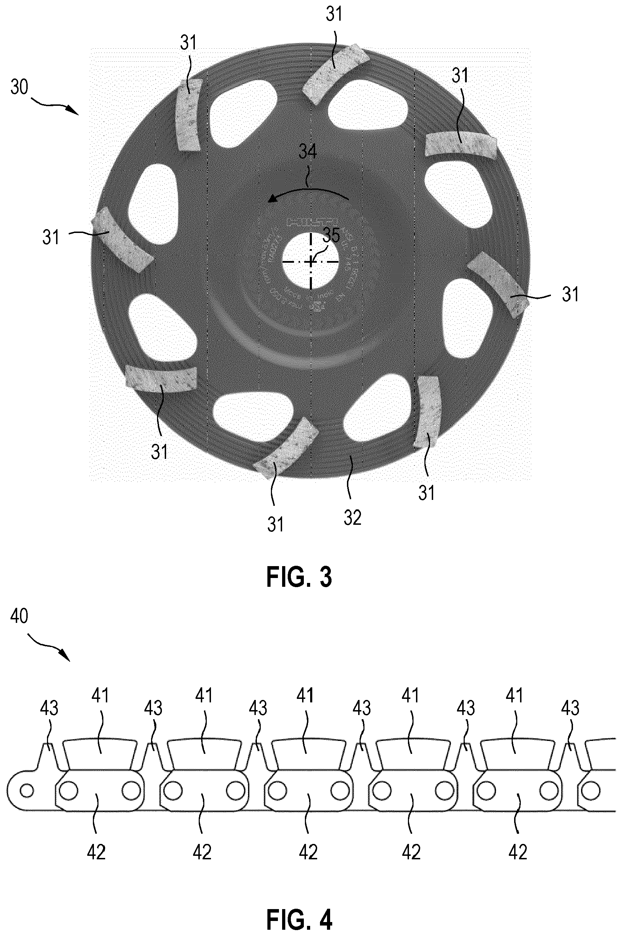

**FIG. 3** zeigt ein als Abtragscheibe **30** ausgebildetes Bearbeitungswerkzeug. Die Abtragscheibe 30 umfasst mehrere Bearbeitungssegmente **31,** einen Grundkörper **32** und eine Werkzeugaufnahme. Die Bearbeitungssegmente 31, die zum Abtragen eingesetzt werden, werden auch als Abtragsegmente bezeichnet und der scheibenförmig ausgebildete Grundkörper 32 wird auch als Topf bezeichnet. Die Abtragsegmente 31 sind fest mit dem Topf 32 verbunden, beispielsweise durch Schrauben, Kleben, Löten oder Schweißen.

Die Abtragscheibe 30 wird über die Werkzeugaufnahme mit einem Werkzeuggerät verbunden und im Abtragbetrieb vom Werkzeuggerät in einer Drehrichtung **34** um eine Drehachse **35** angetrieben. Während der Drehung der Abtragscheibe 30 um die Drehachse 35 wird die Abtragscheibe 30 über ein zu bearbeitendes Werkstück bewegt, wobei die Bewegung der senkrecht zur Drehachse 35 verläuft. Die Abtragscheibe 30 entfernt die Oberfläche des zu bearbeitenden Werkstücks.

**FIG. 4** zeigt ein als Trennschleifkette **40** ausgebildetes Bearbeitungswerkzeug. Die Trennschleifkette 40 umfasst mehrere Bearbeitungssegmente **41,** mehrere gliedförmig ausgebildete Grundkörper **42** und mehrere Verbindungsglieder **43.** Die Bearbeitungssegmente 41, die zum Trennschleifen eingesetzt werden, werden auch als Trennschleifsegmente bezeichnet und die gliedförmig ausgebildeten Grundkörper 42 werden auch als Treibglieder bezeichnet.

Die Treibglieder 42 werden über die Verbindungsglieder 43 verbunden. Im Ausführungsbeispiel sind die Verbindungsglieder 43 über Nietbolzen mit den Treibgliedern 42 verbunden. Die Nietbolzen ermöglichen eine Drehung der Treibglieder 42 relativ zu den Verbindungsgliedern 43 um eine Drehachse, die durch das Zentrum der Nietbolzen verläuft. Die Bearbeitungssegmente 41 sind fest mit den Treibgliedern 42 verbunden, beispielsweise durch Schrauben, Kleben, Löten oder Schweißen.

Die Trennschleifkette 40 wird über eine Werkzeugaufnahme mit einem Werkzeuggerät verbunden und im Betrieb vom Werkzeuggerät in einer Drehrichtung angetrieben. Während der Drehung der Trennschleifkette 40 wird die Trennschleifkette 40 in ein zu bearbeitendes Werkstück bewegt.

Die Herstellung eines Bearbeitungssegmentes **51,** das an seiner Oberseite Hartstoffpartikel mit einem Überstand gegenüber dem Matrixwerkstoff aufweist, erfolgt mithilfe des erfindungsgemäßen Verfahrens zur Herstellung eines Grünlings und des Verfahrens zur Weiterverarbeitung des Grünlings in ein Bearbeitungssegment. In einer ersten Stufe wird ein Grünling **52** hergestellt, in einer zweiten Stufe wird der Grünling 52 zu einem Pressling **53** verdichtet und in einer dritten Stufe wird der Pressling 53 zum Bearbeitungssegment 51 weiterverarbeitet. Alternativ kann in einer ersten Stufe ein Grünling hergestellt werden, der in einer zweiten Stufe zum Bearbeitungssegment weiterverarbeitet wird.

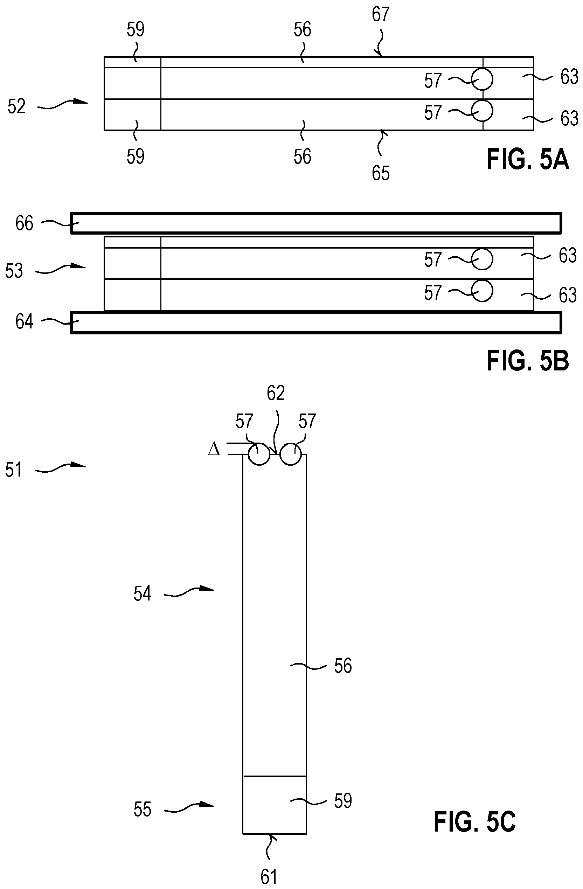

**FIGN. 5A-C** zeigen den Grünling 52 (FIG. 5A), den Pressling 53 (FIG. 5B) und das Bearbeitungssegment 51 (FIG. 5C). Das Bearbeitungssegment 51 ist aus einer Bearbeitungszone **54** und einer Neutralzone **55** aufgebaut. Die Neutralzone 55 ist erforderlich, wenn das Bearbeitungssegment 51 mit dem Grundkörper eines Bearbeitungswerkzeuges verschweißt werden soll und die Kombination aus Matrixwerkstoff und Grundkörper nicht schweißbar ist; bei schweißbaren Kombinationen aus Matrixwerkstoff und Grundkörper kann die Neutralzone 55 entfallen.

Die Bearbeitungszone 54 ist aus einem pulver- oder granulatförmigen ersten Matrixwerkstoff **56** und ersten Hartstoffpartikeln **57,** die gemäß einem definierten ersten Partikelmuster angeordnet sind, aufgebaut und die Neutralzone 55 ist aus einem pulver- oder granulatförmigen zweiten Matrixwerkstoff **59** aufgebaut. Unter dem Begriff "Matrixwerkstoff" werden sämtliche Werkstoffe zum Aufbau von Bearbeitungssegmenten zusammengefasst, in die Hartstoffpartikel eingebettet werden können. Matrixwerkstoffe können aus einem Werkstoff bestehen oder als Gemisch aus verschiedenen Werkstoffen zusammengesetzt sein. Unter dem Begriff "Hartstoffpartikel" werden sämtliche Schneidmittel für Bearbeitungssegmente zusammengefasst; dazu gehören vor allem einzelne Hartstoffpartikel, Verbundteile aus mehreren Hartstoffpartikeln und beschichtete oder gekapselte Hartstoffpartikel.

Das Bearbeitungssegment 51 entspricht vom Aufbau und der Zusammensetzung den Bearbeitungssegmenten 11A, 21A, 21B, 31, 41; das als Bohrring ausgebildete Bearbeitungssegment 11B unterscheidet sich durch seinen ringförmigen Aufbau vom Bearbeitungssegment 51. Die Bearbeitungssegmente können sich in den Abmessungen und in den Krümmungen der Oberflächen voneinander unterscheiden. Der Aufbau der Bearbeitungssegmente wird anhand des Bearbeitungssegmentes 51 erklärt und gilt für die Bearbeitungssegmente 11A, 21A, 21B, 31, 41.

Das Bearbeitungssegment 51 umfasst die ersten Hartstoffpartikel 57, die im ersten Matrixwerkstoff 56 angeordnet sind. Als "erste Hartstoffpartikel" werden die Hartstoffpartikel des Bearbeitungssegmentes 51 bezeichnet, die einen Untergrund bearbeiten, wobei die Anzahl der ersten Hartstoffpartikel 57 und das definierte erste Partikelmuster, gemäß dem die ersten Hartstoffpartikel 57 im ersten Matrixwerkstoff 56 angeordnet sind, an die Anforderungen des Bearbeitungssegmentes 51 angepasst werden.

Das Bearbeitungssegment 51 wird mit einer Unterseite **61** mit dem Grundkörper eines Bearbeitungswerkzeuges verbunden. Bei Bearbeitungssegmenten zum Kernbohren und Bearbeitungssegmenten zum Abtragen ist die Unterseite der Bearbeitungssegmente in der Regel eben ausgebildet, wohingegen die Unterseite bei Bearbeitungssegmenten zum Sägen eine Krümmung aufweist, um die Bearbeitungssegmente an der gekrümmten Stirnfläche der ring- oder scheibenförmigen Grundkörper befestigen zu können. Bei dem in FIG. 5C gezeigten Bearbeitungssegment 51 sind die ersten Hartstoffpartikel 57 gemäß dem definierten ersten Partikelmuster im ersten Matrixwerkstoff 56 angeordnet und weisen an einer der Unterseite 61 gegenüberliegenden Oberseite **62** einen Überstand Δ gegenüber dem ersten Matrixwerkstoff 56 auf.

Der in FIG. 5A gezeigte Grünling 52 wird aus dem ersten Matrixwerkstoff 56, den ersten Hartstoffpartikeln 57, dem zweiten Matrixwerkstoff 59 und einem pulver- oder granulatförmigen Stützmaterial **63** aufgebaut. Das Stützmaterial 63 ist vom ersten Matrixwerkstoff 56 verschieden und dient dazu, die ersten Hartstoffpartikel 57 beim Pressen abzudecken.

Der Grünling 52 wird unter Druckeinwirkung zwischen einem ersten Pressstempel **64,** der eine erste Seitenfläche **65** des Grünlings 52 formt, und einem zweiten Pressstempel **66,** der eine zweite Seitenfläche **67** des Grünlings 52 formt, verdichtet. Dabei verläuft die Pressrichtung des ersten Pressstempels 64 und zweiten Pressstempels 66 zwischen der ersten und zweiten Seitenfläche 65, 67. Als Verfahren, die eine Druckeinwirkung auf den Grünling 52 erzielen, eignen sich beispielsweise Kaltpressverfahren oder Warmpressverfahren. Bei Kaltpressverfahren wird der Grünling 52 ausschließlich einer Druckeinwirkung ausgesetzt, während der Grünling 52 bei Warmpressverfahren neben der Druckeinwirkung einer Temperatureinwirkung bis zu Temperaturen von ca. 200 °C ausgesetzt wird.

Der Pressling 53 wird durch Freiformsintern oder Heißpressen zum Bearbeitungssegment 51 weiterverarbeitet. Beim Freiformsintern erfolgt eine Temperatureinwirkung auf den Pressling 53 und beim Heißpressen eine Druck- und Temperatureinwirkung. Wenn der Pressling 53 durch Freiformsintern weiterverarbeitet wird, wird der Grünling 52 soweit verdichtet, bis der Pressling 53 im Wesentlichen die Endgeometrie des Bearbeitungssegmentes 51 aufweist. Wenn der Pressling 53 durch Heißpressen weiterverarbeitet wird, erfolgt eine weitere Formgebung des Presslings 53 beim Heißpressen.

Die Eigenschaften des Stützmaterials 63, insbesondere die Schmelztemperatur **T_{Schmelz}**, bestimmen das Verhalten des Stützmaterials 63 bei der Weiterverarbeitung. Wenn die Schmelztemperatur T_{Schmelz} des Stützmaterials 63 niedriger als die Sintertemperatur **T_{Sinter}** des ersten Matrixwerkstoffes 56 ist, verändert das Stützmaterial 63 beim Aufheizen seinen pulver- oder granulatförmigen Zustand und verflüssigt sich, bevor der erste Matrixwerkstoff 56 versintert; das flüssige Stützmaterial 63 kann sich während des Sinterprozesses im ersten Matrixwerkstoff 56 verteilen und den Sintervorgang als Infiltrat unterstützen. Wenn die Schmelztemperatur T_{Schmelz} des Stützmaterials 63 höher als die Sintertemperatur T_{Sinter} des ersten Matrixwerkstoffes 56 ist, verbleibt das Stützmaterial 63 beim Aufheizen in seinem pulver- oder granulatförmigen Zustand und kann nach dem Sintervorgang problemlos vom fertigen Bearbeitungssegment entfernt werden.

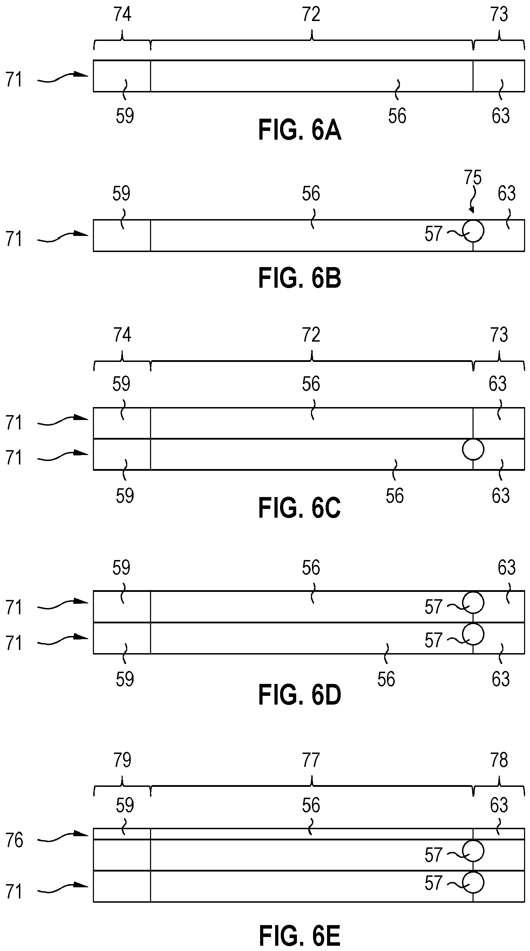

**FIGN. 6A-E** zeigen die Herstellung des Grünlings 52 mithilfe des erfindungsgemäßen Verfahrens zur Herstellung eines Grünlings. Der Grünling 52 wird aus dem ersten Matrixwerkstoff 56, den ersten Hartstoffpartikeln 57, dem zweiten Matrixwerkstoff 59 und dem Stützmaterial 63 aufgebaut.

Die Herstellung des Grünlings 52 startet mit einer Folge eines ersten und zweiten Schrittes, die einfach oder mehrfach (N-fach mit N ≥ 1) durchgeführt werden kann; beim Grünling 52 wird die Folge des ersten und zweiten Schrittes zweifach durchgeführt. Im ersten Schritt der ersten Folge wird eine Matrixschicht **71** aus einem ersten Bereich **72,** einem zweiten Bereich **73** und einem dritten Bereich **74** aufgetragen, wobei im ersten Bereich 72 der erste Matrixwerkstoff 56, im zweiten Bereich 73 das Stützmaterial 63 und im dritten Bereich 74 der zweite Matrixwerkstoff 59 aufgetragen wird (FIG. 6A); bei einem Grünling ohne Neutralzone entfällt der dritte Bereich 74. Im zweiten Schritt der ersten Folge werden die ersten Hartstoffpartikel 57 gemäß dem definierten ersten Partikelmuster in der Matrixschicht 71 angeordnet, wobei die ersten Hartstoffpartikel 57 in einem Übergangsbereich **75** zwischen dem ersten Bereich 72 und zweiten Bereich 73 angeordnet werden (FIG. 6B). FIGN. 6C und 6D zeigen den Grünling 52 beim ersten Schritt der zweiten Folge (FIG. 6C) und beim zweiten Schritt der zweiten Folge (FIG. 6D).

Nachdem die Folge des ersten und zweiten Schrittes zweifach durchgeführt wurde, wird eine obere Matrixschicht **76** aus einem ersten Bereich **77,** einem zweiten Bereich **78** und einem dritten Bereich **79** aufgetragen, wobei im ersten Bereich 77 der erste Matrixwerkstoff 56, im zweiten Bereich 78 das Stützmaterial 63 und im dritten Bereich 79 der zweite Matrixwerkstoff 59 aufgetragen wird (FIG. 6E). Bei einem Grünling ohne Neutralzone entfällt der dritte Bereich 79.

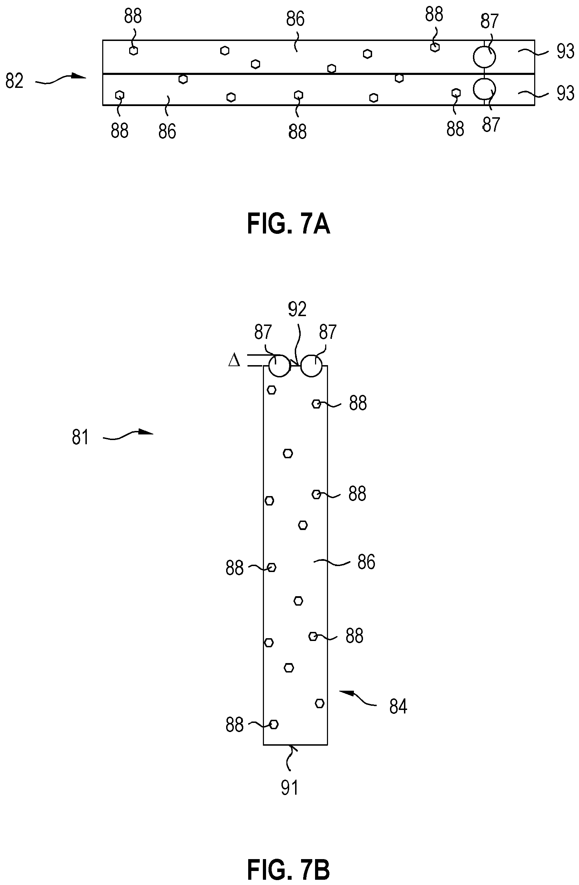

**FIGN. 7A****, B** zeigen ein Bearbeitungssegment **81,** das mit dem erfindungsgemäßen Verfahren zur Herstellung eines Grünlings und dem Verfahren zur Weiterverarbeitung des Grünlings in das Bearbeitungssegment hergestellt wurde. Dabei erfolgt die Herstellung des Bearbeitungssegmentes 81 in zwei Stufen: In einer ersten Stufe wird ein Grünling **82** hergestellt (FIG. 7A) und in einer zweiten Stufe wird der Grünling 82 zum Bearbeitungssegment 81 weiterverarbeitet (FIG. 7B).

Das Bearbeitungssegment 81 unterscheidet sich vom Bearbeitungssegment 51 der FIG. 5C dadurch, dass das Bearbeitungssegment 81 aus einer Bearbeitungszone **84** aufgebaut ist und keine Neutralzone aufweist. Die Bearbeitungszone 84 wird aus einem ersten Matrixwerkstoff **86,** ersten Hartstoffpartikeln **87** und zweiten Hartstoffpartikeln **88** aufgebaut. Abhängig von den Verschleißeigenschaften des ersten Matrixwerkstoffes 86 kann es während der Bearbeitung eines Untergrundes durch Reibung zu einem verstärkten Verschleiß des ersten Matrixwerkstoffes 86 an den Seitenflächen des Bearbeitungssegmentes 81 kommen. Dieser Verschleiß kann durch die zweiten Hartstoffpartikel 88 reduziert werden.

Das Bearbeitungssegment 81 unterscheidet sich vom Bearbeitungssegment 51 der FIG. 5C dadurch, dass das Bearbeitungssegment 81 aus einer Bearbeitungszone **84** aufgebaut ist und keine Neutralzone aufweist. Die Bearbeitungszone 84 wird aus einem pulver- oder granulatförmigen ersten Matrixwerkstoff **86,** ersten Hartstoffpartikeln **87,** die gemäß einem definierten ersten Partikelmuster angeordnet sind, und zweiten Hartstoffpartikeln **88** aufgebaut.

Die ersten Hartstoffpartikel 87 und zweiten Hartstoffpartikel 88 entstammen in der Regel Partikelverteilungen, die durch einen minimalen Durchmesser, einen maximalen Durchmesser und einen mittleren Durchmesser charakterisiert sind. Die zweiten Hartstoffpartikel 88 können als statistisch verteilte Partikel dem ersten Matrixwerkstoff 86 beigemischt werden oder die zweiten Hartstoffpartikel 88 werden gemäß einem definierten zweiten Partikelmuster im ersten Matrixwerkstoff 86 angeordnet, wobei die zweiten Hartstoffpartikel 88 insbesondere im Bereich der Seitenflächen des Bearbeitungssegmentes 81 angeordnet werden. Bei dem in FIG. 7B gezeigten Bearbeitungssegment 81 wurden die zweiten Hartstoffpartikel 88 dem ersten Matrixwerkstoff 86 als statistisch verteilte Partikel beigemischt.

Das Bearbeitungssegment 81 wird mit einer Unterseite **91** mit dem Grundkörper des Bearbeitungswerkzeuges verbunden. Die Bearbeitung eines Untergrundes erfolgt durch erste Hartstoffpartikel 87, die an einer der Unterseite 91 gegenüberliegenden Oberseite **92** angeordnet sind.

Bei dem in FIG. 7B gezeigten Bearbeitungssegment 81 sind die ersten Hartstoffpartikel 87 gemäß einem definierten ersten Partikelmuster im ersten Matrixwerkstoff 86 angeordnet und weisen an einer der Unterseite 91 gegenüberliegenden Oberseite **92** einen Überstand Δ gegenüber dem ersten Matrixwerkstoff 86 auf.

Die Herstellung des Grünlings 82 erfolgt analog zur Herstellung des Grünlings 52, wobei das Auftragen des zweiten Matrixwerkstoffes entfällt. Der Grünling 82 wird aus dem ersten Matrixwerkstoff 86, den ersten Hartstoffpartikeln 87, den zweiten Hartstoffpartikeln 88 und einem pulver- oder granulatförmigen Stützmaterial **93** aufgebaut. Das Stützmaterial 93 ist vom ersten Matrixwerkstoff 86 verschieden und dient dazu, die ersten Hartstoffpartikel 87 beim Pressen abzudecken.

Der Grünling 82 wird durch Freiformsintern oder Heißpressen zum Bearbeitungssegment 81 weiterverarbeitet. Beim Freiformsintern erfolgt eine Temperatureinwirkung und beim Heißpressen eine Druck- und Temperatureinwirkung auf den Grünling 82. Die Eigenschaften des Stützmaterials 93, insbesondere die Schmelztemperatur **T_{Schmelz}**, bestimmen das Verhalten des Stützmaterials 93 bei der Weiterverarbeitung. Wenn die Schmelztemperatur T_{Schmelz} des Stützmaterials 93 niedriger als die Sintertemperatur Tsinter des ersten Matrixwerkstoffes 86 ist, verändert das Stützmaterial 93 beim Aufheizen seinen pulver- oder granulatförmigen Zustand und verflüssigt sich, bevor der erste Matrixwerkstoff 86 versintert; das flüssige Stützmaterial 93 kann sich während des Sinterprozesses im ersten Matrixwerkstoff 86 verteilen und den Sintervorgang als Infiltrat unterstützen. Wenn die Schmelztemperatur T_{Schmelz} des Stützmaterials 93 höher als die Sintertemperatur T_{Sinter} des ersten Matrixwerkstoffes 86 ist, verbleibt das Stützmaterial 93 beim Aufheizen in seinem pulver- oder granulatförmigen Zustand und kann nach dem Sintervorgang problemlos vom fertigen Bearbeitungssegment entfernt werden.

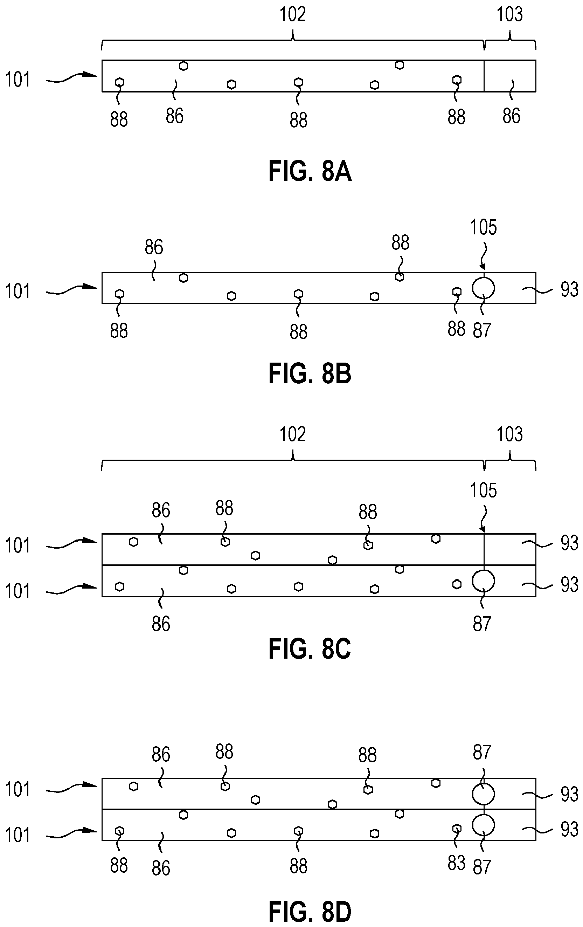

**FIGN. 8A-D** zeigen die Herstellung des Grünlings 82 mithilfe des erfindungsgemäßen Verfahrens zur Herstellung eines Grünlings. Der Grünling 82 wird aus dem ersten Matrixwerkstoff 86, den ersten Hartstoffpartikeln 87, den zweiten Hartstoffpartikeln 88 und dem Stützmaterial 93 aufgebaut.

Die Herstellung des Grünlings 82 startet mit einer Folge eines ersten und zweiten Schrittes, die einfach oder mehrfach (N-fach mit N ≥ 1) durchgeführt werden kann; beim Grünling 82 wird die Folge des ersten und zweiten Schrittes zweifach durchgeführt. Im ersten Schritt der ersten Folge wird eine Matrixschicht **101** aus einem ersten Bereich **102** und einem zweiten Bereich **103** aufgetragen, wobei im ersten Bereich 102 der erste Matrixwerkstoff 86 und im zweiten Bereich 103 das Stützmaterial 93 aufgetragen wird (FIG. 8A). Im zweiten Schritt der ersten Folge werden die erste Hartstoffpartikel 87 gemäß dem definierten ersten Partikelmuster in der Matrixschicht 101 angeordnet, wobei die ersten Hartstoffpartikel 87 in einem Übergangsbereich **105** zwischen dem ersten Bereich 102 und zweiten Bereich 103 angeordnet werden (FIG. 8B). FIGN. 8C und 8D zeigen den Grünling 82 beim ersten Schritt der zweiten Folge (FIG. 8C) und beim zweiten Schritt der zweiten Folge (FIG. 8D).

## Patentansprüche

1. Verfahren zur Herstellung eines Grünlings (52; 82) für ein Bearbeitungssegment (11A, 11B; 21A, 21B; 31; 41; 51; 81) aus einem pulver- oder granulatförmigen ersten Matrixwerkstoff (56; 86) und ersten Hartstoffpartikeln (57; 87), die gemäß einem definierten ersten Partikelmuster angeordnet werden, wobei das Bearbeitungssegment mit einer Unterseite (61; 91) mit einem Grundkörper (12A, 12B; 22A, 22B; 32; 42) eines Bearbeitungswerkzeuges (10A, 10B; 20A, 20B; 30; 40) verbunden wird, **gekennzeichnet durch** eine Folge eines ersten Schrittes und zweiten Schrittes, die N-fach, N ≥ 1 ausgeführt wird, wobei:
▪ im ersten Schritt eine Matrixschicht (71; 101) aus einem ersten Bereich (72; 102) und einem zweiten Bereich (73; 103) aufgetragen wird, wobei im ersten Bereich (72; 102) der erste Matrixwerkstoff (56; 86) und im zweiten Bereich (73; 103) ein pulver- oder granulatförmiges Stützmaterial (63; 93), das vom ersten Matrixwerkstoff (56; 86) verschieden ist, aufgetragen wird, und
▪ im zweiten Schritt die ersten Hartstoffpartikel (57; 87) gemäß dem definierten ersten Partikelmuster in der Matrixschicht (71; 101) angeordnet werden, wobei die ersten Hartstoffpartikel (57; 87) in einem Übergangsbereich (75; 105) zwischen dem ersten Bereich (72; 102) und zweiten Bereich (73; 103) angeordnet werden.

2. Verfahren nach Anspruch 1, **dadurch gekennzeichnet, dass** im zweiten Bereich (73; 103) der N Matrixschichten (71; 101) ein Stützmaterial (63; 93) mit einer Schmelztemperatur (T_{Schmelz}) aufgetragen wird, die höher als die Sintertemperatur (T_{Sinter}) des ersten Matrixwerkstoffes (56; 86) ist.

3. Verfahren nach Anspruch 1, **dadurch gekennzeichnet, dass** im zweiten Bereich (73; 103) der N Matrixschichten (71; 101) ein Stützmaterial (63; 93) mit einer Schmelztemperatur (T_{Schmelz}) aufgetragen wird, die niedriger als die Sintertemperatur (T_{Sinter}) des ersten Matrixwerkstoffes (56; 86) ist.

4. Verfahren nach Anspruch 1, **dadurch gekennzeichnet, dass** nach der N-ten Folge eine obere Matrixschicht (76) aus einem ersten Bereich (77) und einem zweiten Bereich (78) aufgetragen wird, wobei im ersten Bereich (77) der erste Matrixwerkstoff (56) und im zweiten Bereich (78) das Stützmaterial (63) aufgetragen wird.

5. Verfahren nach Anspruch 4, **dadurch gekennzeichnet, dass** im zweiten Bereich (73) der N Matrixschichten (71) und im zweiten Bereich (78) der oberen Matrixschicht (76) ein Stützmaterial (63) mit einer Schmelztemperatur (T_{Schmeiz}) aufgetragen wird, die höher als die Sintertemperatur (T_{Sinter}) des ersten Matrixwerkstoffes (56) ist.

6. Verfahren nach Anspruch 4, **dadurch gekennzeichnet, dass** im zweiten Bereich (73) der N Matrixschichten (71) und im zweiten Bereich (78) der oberen Matrixschicht (76) ein Stützmaterial (63) mit einer Schmelztemperatur (T_{Schmelz}) aufgetragen wird, die niedriger als die Sintertemperatur (T_{Sinter}) des ersten Matrixwerkstoffes (56) ist.

7. Verfahren zur Weiterverarbeitung des Grünlings (52; 82), der mit dem Verfahren zur Herstellung eines Grünlings nach einem der Ansprüche 1 bis 6 hergestellt wurde, in ein Bearbeitungssegment (51; 81).

8. Verfahren nach Anspruch 7, **dadurch gekennzeichnet, dass** der Grünling (52) unter Druckeinwirkung zu einem Pressling (53) verdichtet wird und der Pressling (53) anschließend zum Bearbeitungssegment (51) weiterverarbeitet wird.

9. Verfahren nach Anspruch 8, **dadurch gekennzeichnet, dass** der Pressling (53) durch Freiformsintern oder Heißpressen zum Bearbeitungssegment (51) weiterverarbeitet wird.

10. Verfahren nach Anspruch 7, **dadurch gekennzeichnet, dass** der Grünling (82) durch Freiformsintern oder Heißpressen zum Bearbeitungssegment (81) weiterverarbeitet wird.
